# EUROPÄISCHE PATENTSCHRIFT

(11) **EP 3 014 977 B1**
(45) Veröffentlichungstag und Bekanntmachung des Hinweises auf die Patenterteilung: **21.02.2018**
(21) Anmeldenummer: 15185074.0
(22) Anmeldetag: 14.09.2015
(51) Int. Cl.: A01D 87/02, A01D 90/02, A01D 51/00

(54) **ÜBERLADESTATION ZUR AUFNAHME UND ÜBERGABE VON LADEGUT**
TRANSFER STATION FOR RECEIVING AND DELIVERING OF LOADS
STATION DE TRANSBORDEMENT DESTINEE A LA RECEPTION ET A LA TRANSMISSION DE CHARGEMENTS

(30) Priorität: 27.10.2014 DE 202014105122 U
(43) Veröffentlichungstag der Anmeldung: 04.05.2016
(73) Patentinhaber: Fliegl sen., Josef, 84556 Kastl (DE)
(72) Erfinder: Fliegl sen., Josef, 84556 Kastl (DE)
(74) Vertreter: Tetzner, Michael

(56) Entgegenhaltungen:
- EP-A1- 2 992 751
- DE-A1-102011 122 166
- DE-U1-202012 103 905

## Beschreibung

Die Erfindung betrifft eine Überladestation zur Aufnahme und Übergabe von Ladegut.

Derartige Überladestationen kommen unter anderem in der Landwirtschaft zum Einsatz und werden beispielsweise dazu genutzt, um auf dem Boden gelagertes Erntegut aufzunehmen und in einen Transportwagen zu übergeben.

Beispielsweise ist aus der DE 20 2012 103 905 U1 eine solche Überladestation zur Aufnahme und Übergabe von Ladegut bekannt. Diese weist auf einem Fahrgestell einen Aufnahmebehälter mit einem Boden, einer ersten, feststehenden Stirnwand und einer zweiten, klappbaren Stirnwand auf. Entlang des Bodens verläuft eine Bodenfördervorrichtung in Form einer Förderschnecke. An die Bodenfördervorrichtung schließt sich eine Weiterfördervorrichtung an. Die klappbare Stirnwand bildet in der herunter geklappten Stellung eine Rampe aus, durch die bei einem Hineinfahren der Überladestation in das auf dem Boden liegende Ladegut das Ladegut in Richtung der Bodenfördervorrichtung geschoben wird. Eine in die Rampe integrierte Fördervorrichtung in Form eines Förderbands unterstützt dabei ein Zuführen des Ladeguts zu der Bodenfördervorrichtung. Die Bodenfördervorrichtung transportiert das Ladegut dann zu der Weiterfördervorrichtung, über die das Ladegut schließlich in beispielsweise den Laderaum eines Anhängers übergeben werden kann.

Bei der aus der DE 20 2012 103 905 U1 bekannten Überladestation wird die Größe des beim Hineinfahren in das Ladegut aufnehmbaren Ladegutstroms durch die Breite der als Rampe dienenden Stirnwand beschränkt. Eine Erhöhung der Größe des aufnehmbaren Ladegutstroms könnte grundsätzlich durch eine Verbreiterung der als Rampe dienenden Stirnwand erfolgen, was jedoch eine entsprechende Verlängerung des Bodens sowie der Bodenfördervorrichtung erforderlich machen würde. Dies führt nicht nur zu einer grundsätzlich ungewünschten Vergrößerung der Überladestation sondern auch zu höheren Herstellungskosten für diese.

Aus der DE 10 2011 122 166 A1 ist weiterhin eine Überladestation mit einem einen Boden umfassenden Aufnahmebehälter, der einen Boden sowie eine Rampe aufweist, die sich ausgehend von dem Boden quer bezüglich einer Längsausrichtung des Bodens erstreckt, bekannt. Die Überladestation umfasst zudem eine sich entlang des Bodens in dessen Längsausrichtung erstreckende Bodenfördervorrichtung und eine sich an die Bodenfördervorrichtung anschließende Weiterfördervorrichtung. Weiterhin sind an der Rampe an dem bezüglich des Bodens distalen Ende eckseitig Zuführelemente angeordnet.

Die nachveröffentlichte EP 2 992 751 A1 offenbart eine Überladestation mit einem Aufnahmebehälter mit einem Boden und einer Rampe, die sich ausgehend von dem Boden quer bezüglich einer Längsausrichtung des Bodens erstreckt. Weiterhin ist eine Weiterfördervorrichtung vorgesehen. An der Rampe an dem bezüglich des Bodens distalen Ende sind zwei Zuführelemente angeordnet, die die Rampe sowohl in Längsausrichtung des Bodens als auch quer dazu überragen. Die Zuführelemente umfassen jeweils eine Zuführfördervorrichtung, die jeweils zwei Transportwalzen umfassen und die jeweils eine von dem freien Ende in Richtung der Rampe ausgerichtete Förderrichtung aufweisen.

Ausgehend von diesem Stand der Technik hat der Erfindung die Aufgabe zugrunde gelegen, die Größe des aufnehmbaren Ladegutstroms bei einer Überladestation, wie sie aus der DE 20 2012 103 905 U1 oder der DE 10 2011 122 166 A1 bekannt ist, auf möglichst einfache Weise zu erhöhen.

Diese Aufgabe wird mittels einer Überladestation gemäß Anspruch 1 gelöst. Vorteilhafte Ausgestaltungen der erfindungsgemäßen Überladestation sind Gegenstände der weiteren Patentansprüche und ergeben sich aus der nachfolgenden Beschreibung der Erfindung.

Eine gattungsgemäße Überladestation zur Aufnahme und Übergabe von Ladegut umfasst zumindest
- einen Aufnahmebehälter mit einem Boden und einer Rampe, die sich ausgehend von dem Boden quer zu einer Längsausrichtung des Bodens erstreckt,
- eine entlang des Bodens in dessen Längsausrichtung erstreckende Bodenfördervorrichtung und
- eine (zumindest in einer Arbeitsstellung der Überladestation) sich an die Bodenfördervorrichtung anschließende Weiterfördervorrichtung,
wobei an der Rampe an dem bezüglich des Bodens distalen Ende mindestens ein Zuführelement angeordnet ist, das die Rampe (zumindest in einer Arbeitsstellung der Überladestation) sowohl in Längsausrichtung des Bodens als auch quer dazu überragt.

Vorzugsweise kann dabei vorgesehen sein, dass ein erstes Zuführelement die Rampe bezüglich einer ersten Richtung der Längsausrichtung des Bodens überragt und ein zweites Zuführelement die Rampe bezüglich einer zweiten Richtung der Längsausrichtung des Bodens überragt.

Durch das oder die Zuführelemente wird das Ladegut in Richtung der Rampe geführt, wobei dadurch, dass das freie Ende des oder der Zuführelemente die Rampe in Längsausrichtung des Bodens überragt, die Breite des Streifens des Ladeguts, der bei einem Hineinbewegen der Überladestation in das Ladegut erfasst wird, größer als die Breite der Rampe (d.h. die Erstreckung der Rampe in Längsausrichtung des Bodens) selbst ist. Durch eine einfache und kostengünstige Anordnung von einem oder vorzugsweise mindestens zwei solcher Zuführelemente kann somit die Größe des aufnehmbaren Ladegutstroms relevant erhöht werden, ohne dass es dazu einer Verbreiterung der Rampe und damit der Bodenfördervorrichtung bedarf.

Erfindungsgemäß gekennzeichnet ist eine solche Überladestation dadurch, dass mindestens eines, vorzugsweise beide Zuführelemente schwenkbar bezüglich der Rampe ausgebildet und insbesondere schwenkbar mit der Rampe verbunden sind. Die Schwenkbarkeit kann zum einen dazu dienen, den Überstand des oder der Zuführelemente über die Rampe und damit die Breite des von der Überladestation erfassten Streifens des Ladeguts zu verändern. Weiterhin kann die Schwenkbarkeit des oder der Zuführelemente dazu dienen, diese für einen Transport der Überladestation einzuklappen, so dass diese die Rampe nicht mehr oder nur noch in einem verringerten Maße überragen. Die Abmessungen der Überladestation können so für den Transport verringert werden. Da erfindungsgemäß das oder die Zuführelemente (jeweils) um eine erste, quer (beispielsweise in etwa senkrecht) zu einer Oberseite der Rampe verlaufende Drehachse und weiterhin um eine zweite, quer (beispielsweise in etwa senkrecht) zu der ersten Drehachse verlaufende Drehachse schwenkbar ausgebildet sind, kann sowohl eine Einstellbarkeit des Überstands als auch ein Einklappen des oder der Zuführelemente für einen Transport realisiert werden.
Bevorzugt ist mindestens eines, besonders bevorzugt beide der Zuführelemente an (jeweils) einem Übergang von dem distal bezüglich des Bodens angeordneten Ende der Rampe in eine der quer zur Längsausrichtung des Bodens ausgerichteten Seiten der Rampe mit dieser verbunden. Dadurch wird das Ladegut von dem oder den Zuführelementen vorteilhaft auf das distal bezüglich des Bodens angeordneten Ende der Rampe zugeführt, wobei die gesamte Breite der Rampe genutzt wird.
Ein Zuführen des Ladeguts zu der Rampe mittels des oder der Zuführelemente kann vorzugsweise dadurch unterstützt werden, dass das oder die Zuführelemente (jeweils) eine Zuführfördervorrichtung mit einer von dem freien Ende in Richtung der Rampe ausgerichteten Förderrichtung umfassen. Die Zuführfördervorrichtung kann dabei vorteilhaft in Form einer Förderschnecke und/oder in Form eines Förderbandes ausgebildet sein. Durch die erfindungsgemäße Ausgestaltung einer Überladestation kann die Größe des aufnehmbaren und über die Rampe der Bodenfördervorrichtung zuführbaren Ladegutstroms relevant erhöht werden. Um dabei zu vermeiden, dass Ladegut seitlich von der Laderampe herunterfällt und somit nicht weitergefördert wird, kann in einer weiterhin bevorzugten Ausgestaltung der erfindungsgemäßen Überladestation vorgesehen sein, dass die Rampe an einer oder beiden ihrer quer zur Längsausrichtung des Bodens verlaufenden Seiten eine quer und insbesondere senkrecht zur Rampenbodenfläche ausgerichtete Führungswand aufweist.

In einer weiterhin bevorzugten Ausgestaltung der erfindungsgemäße Überladestation kann zudem vorgesehen sein, dass die Rampe an dem bezüglich des Bodens proximalen Ende um eine in Längsausrichtung des Bodens verlaufende Schwenkachse schwenkbar ist. Dadurch kann die Rampe bei einer Nichtnutzung der Überladestation und insbesondere für einen Transport der Überladestation hochgeklappt werden, wodurch sich deren Abmessungen erheblich verringern.

Weiterhin kann vorgesehen sein, dass auf der der Rampe gegenüber liegenden Seite des Bodens eine Stirnwand angeordnet ist. Durch diese kann verhindert werden, dass Ladegut auf der der Rampe gegenüberliegenden Seite des Bodens aus der Überladestation herausfällt.

Um ein Zuführen des aufgenommenen Ladeguts zu der Bodenfördervorrichtung zu unterstützten, kann in einer bevorzugten Ausgestaltung der erfindungsgemäßen Überladestation die Rampe mit einer Rampenfördervorrichtung, die eine in Richtung des Bodens ausgerichtete Förderrichtung aufweist, ausgebildet sein.

Weiterhin kann die Rampe ein Stützelement umfasst, durch das die Rampe auf dem Untergrund abgestützt wird. Dabei kann auch vorgesehen sein, dass das Stützelement hinsichtlich des Abstands des bezüglich des Bodens distalen Endes der Rampe zu dem Untergrund einstellbar ist. Das Stützelement kann weiterhin bevorzugt derart ausgebildet sein, dass es eine Bewegung der Überladestation möglichst wenig behindert. Dazu kann ein Kontakt zwischen dem Stützelement und dem Untergrund beispielsweise auf einem Rad, einer Rolle oder einer Gleitkufe beruhen. Bei einem Stützelement mit einer Gleitkufe kann vorzugsweise vorgesehen sein, dass die Neigung der Gleitkufe relativ zu der Rampe bzw. dem Untergrund einstellbar ist, um diese unabhängig von der Rampe an unterschiedliche Neigungen des Untergrunds anpassen zu können.

Die erfindungsgemäße Überladestation kann weiterhin bevorzugt derart ausgebildet werden, dass die Weiterfördervorrichtung von der sich an die Bodenfördervorrichtung anschließenden Anordnung in eine entlang des Bodens ausgerichtete Anordnung bewegbar ist. Die letztgenannte Anordnung der Weiterfördervorrichtung kann insbesondere für einen Transport der Überladestation vorgesehen sein, da so die Abmessungen der Überladestation verringert werden können.

In einer weiterhin bevorzugten Ausgestaltung der erfindungsgemäßen Überladestation kann noch ein Fahrgestell vorgesehen sein, das ein Bewegen der Überladestation sowohl zum Aufnehmen von Ladegut als auch für einen Transport der Überladestation ermöglicht. Dazu kann das Fahrgestell vorzugsweise Räder umfassen, die derart schwenkbar sind, dass ein Bewegen der Überladestation in Längsausrichtung des Bodens sowie quer dazu möglich ist. Dies ermöglicht, die Überladestation für den Transport in Längsausrichtung des Bodens zu bewegen. Dadurch kann die Breite der Überladestation (bezogen auf die Fahrtrichtung) während des Transports gering gehalten werden. Dies gilt insbesondere, wenn diese mit einer schwenkbaren Rampe ausgebildet ist. Für das Aufnehmen des Ladeguts kann die Überladestation dagegen quer und insbesondere senkrecht zur Längsausrichtung des Bodens bewegt werden, wobei dann die vergleichsweise große Breite (bezogen auf die Fahrtrichtung) der Überladestation und insbesondere der Rampe mit den diese noch überragenden Zuführelementen ausgenutzt wird, um einen möglichst breiten Streifen des aufzunehmenden Ladeguts zu erfassen.

Das Fahrgestell kann selbstgetrieben oder fremdgetrieben ausgebildet sein. Im zweiten Fall kann die Überladestation vorzugsweise mittels eines Zugfahrzeugs, beispielsweise eines Traktors, bewegt werden. Dazu kann die Überladestation vorzugsweise einen, insbesondere jedoch zwei Koppelungsvorrichtungen zur Ankoppelung an das Zugfahrzeug vorsehen. Dabei kann die Überladestation über eine erste Koppelungsvorrichtung mit dem Zugfahrzeug verbunden sein, sofern diese transportiert werden soll. Die Überladestation wird dabei vorzugsweise von dem Zugfahrzeug gezogen. Für ein Bewegen der Überladestation zum Aufnehmen von Ladegut kann diese mittels einer zweiten Koppelungsvorrichtung mit dem Zugfahrzeug verbunden werden. Dabei kann die Überladestation insbesondere von dem Zugfahrzeug geschoben werden. Es besteht auch die Möglichkeit, die Überladestation sowohl selbstgetrieben als auch mit mindestens einer Koppelungsvorrichtung zur Anbindung an ein Zugfahrzeug auszubilden. So kann beispielsweise vorgesehen sein, die Überladestation für das Aufnehmen des Ladeguts selbstangetrieben zu betreiben, während diese für einen Transport von einem Zugfahrzeug gezogen wird.

Die Erfindung wird nachfolgend anhand von in den Zeichnungen dargestellten Ausführungsbeispielen näher erläutert. In den Zeichnungen zeigt
- Fig. 1: eine erste Ausführungsform einer erfindungsgemäßen Überladestation in einer Arbeitsstellung;
- Fig. 2: eine Detailansicht eines Zuführelements der Überladestation;
- Fig. 3: das die angetriebenen Räder aufweisende Ende der in einer Transportstellung befindlichen Überladestation;
- Fig. 4: das das Führerhaus aufweisende Ende der in der Transportstellung befindlichen Überladestation;
- Fig. 5: eine Detailansicht eines Stützelements der Überladestation;
- Fig. 6: eine zweite Ausführungsform einer erfindungsgemäßen Überladestation in einer Arbeitsstellung; und
- Fig. 7: eine Detailansicht eines Zuführelements der Überladestation gemäß der Fig. 6.

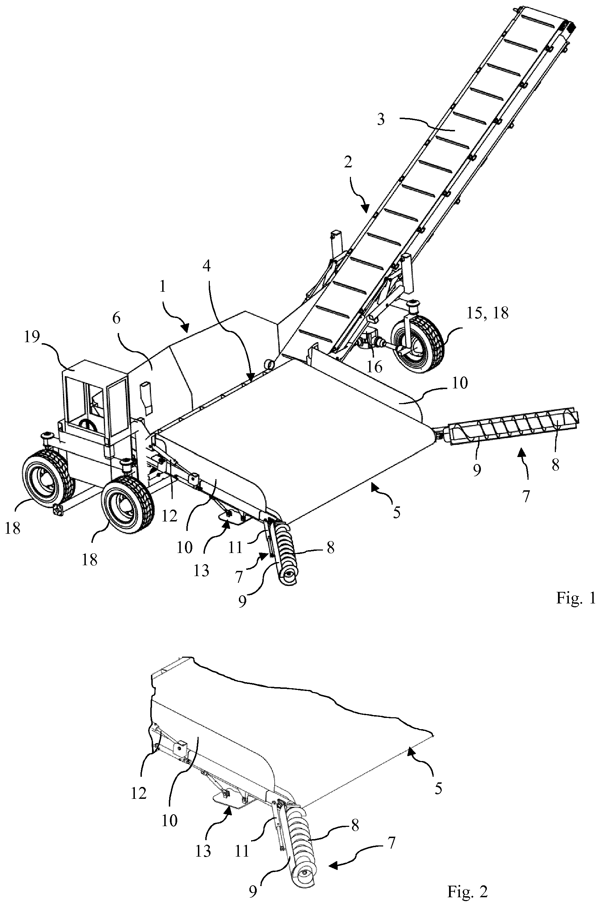

Die Fig. 1 bis 5 zeigen eine erste Ausführungsform einer erfindungsgemäßen Überladestation. Diese umfasst ein Fahrgestell mit darauf angeordnetem Aufnahmebehälter 1 sowie mit einer Weiterfördervorrichtung 2. Die Weiterfördervorrichtung 2 ist als Hochfördervorrichtung ausgeführt. Diese dient somit dazu, das mittels des Aufnahmebehälters 1 aufgenommene Ladegut (nicht dargestellt), beispielsweise auf dem Untergrund liegende und insbesondere aufgeschüttete Feldfrüchte, an eine höher gelegene Stelle zu transportieren, wozu die Weiterfördervorrichtung mit einem Förderband 3 ausgestattet ist. Beispielsweise kann vorgesehen sein, einen Mulden-Lastkraftwagen oder Mulden-Anhänger mit dem Ladegut zu beladen, indem dieser mit dem nach oben offenen Laderaum unterhalb des freien Endes der Weiterfördervorrichtung 2 positioniert wird, so dass das Ladegut nach dem Erreichen des freien Endes der Weiterfördervorrichtung 2 in den Laderaum des Mulden-Lastkraftwagens oder des Mulden-Anhängers fällt.

Der Aufnahmebehälter 1 weist einen Boden auf, oberhalb dessen eine Bodenfördervorrichtung 4 angeordnet ist. Der Boden ist deutlich länger als breit. Die Bodenfördervorrichtung 4, die beispielsweise ebenfalls als Förderband ausgebildet sein kann, erstreckt sich entlang der Längsausrichtung des Bodens. An dem in Förderrichtung der Bodenfördervorrichtung 4 hinteren Ende schließt sich direkt die Weiterfördervorrichtung 2 mit ihrem bezüglich ihrer Förderrichtung vorderen Ende an. Mittels der Bodenfördervorrichtung 4 kann Ladegut, das in den Aufnahmebehälter 1 aufgenommen wurde, zu der Weiterfördervorrichtung 2 transportiert werden.

An einer der Längsseiten des Bodens schließt sich eine Rampe 5 an diesen an. Die Rampe 5 erstreckt sich somit ausgehend von dem Boden quer zur Längsausrichtung des Bodens. Das bezüglich des Bodens distale Ende der Rampe 5 wird für eine Nutzung der Überladestation zur Aufnahme und Übergabe von Ladegut auf dem Untergrund aufliegend oder kurz oberhalb davon positioniert. Durch ein Verfahren der Überladestation quer zur Längsausrichtung des Bodens kann die Rampe 5 in auf dem Untergrund gelagertes Ladegut hinein geschoben werden, wodurch das Ladegut über die Rampe 5 der Bodenfördervorrichtung 4 zugeführt wird, die es dann zu der Weiterfördervorrichtung 2 transportiert. Eine der Rampe 5 bezüglich des Bodens gegenüberliegende Stirnwand 6 verhindert dabei, dass das Ladegut über die Bodenfördervorrichtung 4 hinausgeschoben wird und aus der Überladestation herausfällt.

Um den Streifen in dem Ladegut, der bei einem Hineinfahren der Überladestation von dieser erfasst wird, möglichst breit zu halten, ist an der Rampe 5 im Bereich der abgerundeten Übergänge von dem bezüglich des Bodens distalen Ende zu den beiden quer zur Längsausrichtung des Bodens ausgerichteten Seiten jeweils ein Zuführelement 7 angeordnet. Die Zuführelemente 7 erstrecken sich, ausgehend von Ihren Befestigungsstellen an der Rampe 5, sowohl in Längsausrichtung des Bodens als auch quer dazu und überragen die Rampe 5 entsprechend. Dadurch wird eine Art Zuführtrichter ausgebildet, durch die ein Streifen des Ladeguts erfasst wird, der breiter als die Breite der Rampe 5 ist. Das von den Zuführelementen 7 erfasste Ladegut wird infolge der schrägen Ausrichtungen der Zuführelemente 7 auf die Rampe 5 zu geführt. Folglich wird bei einem Hineinfahren der Überladestation in das Ladegut ein größerer Ladegutstrom aufgenommen, als dies ohne die erfindungsgemäßen Zuführelemente 7 der Fall wäre.

Ein Zuführen des von den Zuführelementen 7 erfassten Ladeguts zu der Rampe 5 wird durch in die Zuführelemente 7 integrierte Zuführfördervorrichtungen unterstützt, deren Förderrichtungen jeweils von dem freien Ende des entsprechenden Zuführelements 7 in Richtung der Rampe 5 ausgerichtet sind. In dem in den Fig. 1 bis 5 dargestellten Ausführungsbeispiel sind die Zuführfördervorrichtungen in Form von Förderschnecken 8 ausgebildet, die innerhalb von Gehäusen 9, die einen teilkreisförmigen Querschnitt aufweisen, rotierend angetrieben werden.

Um sicherzustellen, dass das erfasste Ladegut weitgehend vollständig über die Rampe 5 der Bodenfördervorrichtung 4 zugeführt wird, weist die Rampe 5 an ihren beiden Seiten jeweils eine Führungswand 10 auf.

Um die Breite des von den Zuführelementen 7 erfassten Streifens des Ladeguts einstellen zu können, sind die Zuführelemente 7 jeweils um eine in etwa vertikal (beziehungsweise senkrecht bezüglich des Bodens) verlaufende, erste Drehachse schwenkbar an der Rampe 5 befestigt. Ein Schwenken der Zuführelemente 7 beziehungsweise ein Einstellen und Sichern der vorgesehenen Neigungsausrichtungen erfolgt mittels jeweils eines hydraulisch oder pneumatisch angetriebenen Zylinders 11.

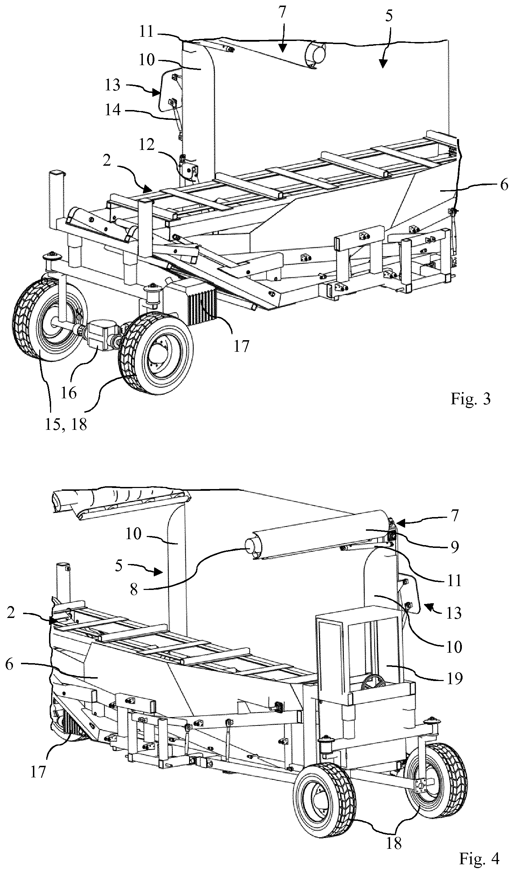

Die Zuführelemente 7 sind weiterhin um jeweils eine zweite Drehachse, die in etwa tangential entlang des dazugehörigen abgerundeten Übergangs ausgerichtet ist, schwenkbar mit der Rampe 5 verbunden. Dies dient dazu, die Höhe der Überladestation in ihrer Transportstellung möglichst gering zu halten, indem die Zuführelemente 7 in eine in etwa senkrecht bezüglich der Rampe 5 ausgerichtete Stellung geschwenkt werden. In der Transportstellung ist auch die Rampe 5 in einer in etwa senkrechten Stellung angeordnet (vgl. Fig. 3 und 4). Dies wird durch eine Verbindung der Rampe 5 mit dem restlichen Teil des Aufnahmebehälters 1 erreicht, die um eine sich in Richtung der Längsausrichtung des Bodens erstreckende Drehachse schwenkbar ausgebildet ist. Ein Schwenken der Rampe 5 wird dabei durch weitere hydraulisch oder pneumatisch angetriebene Zylinder 12 bewirkt. Das Schwenken der Zuführelemente 7 in die Ausrichtung für die Transportstellung der Überladestation kann gewichtskraftbedingt und damit selbsttätig durch das Schwenken der Rampe 5 in die senkrechte Stellung erfolgen. Gleiches kann für das Schwenken der Zuführelemente 7 in die der Arbeitsstellung der Überladestation entsprechende Ausrichtung beim Herunterschwenken der Rampe 5 gelten.

Um das Schwenken der Zuführelemente 7 um die zweiten Drehachsen nicht zu verhindern, sind die Zylinder 11 im Bereich Ihrer Anbindungen an die Rampe 5 ebenfalls um jeweils eine Drehachse schwenkbar, die in etwa parallel zu der zweiten Drehachse des dazugehörigen Zuführelements 7 angeordnet ist.

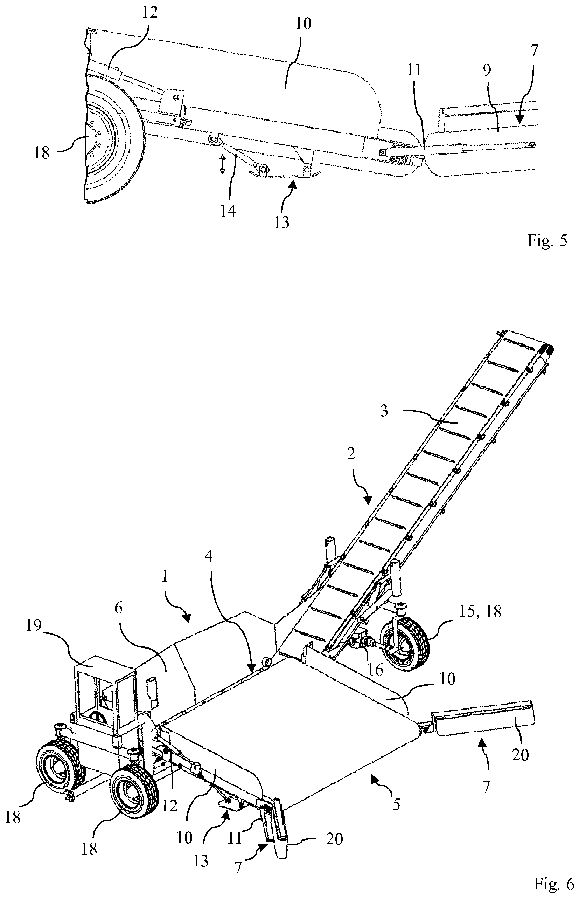

Mittels der Zylinder 12 kann auch die Distanz des bezüglich des Bodens distalen Endes der Rampe 5 zu dem Untergrund eingestellt und gehalten werden. Dabei werden die Zylinder 12 durch zwei Stützelemente 13 in Form von Gleitkufen unterstützt (vgl. insbesondere Fig. 2 und 5). Dabei ist eine Neigung der Gleitkufen bezüglich des Untergrunds mittels Einstellelementen 14 einstellbar (vgl. Fig. 5). Die Einstellelemente 14 können beispielsweise als hydraulisch oder pneumatisch angetriebene Zylinder oder als mechanische Spindeln (beispielsweise manuell oder elektromotorisch betrieben) ausgebildet sein.

Die Überladestation ist selbstgetrieben ausgebildet. Dazu sind zwei Antriebsräder 15 vorgesehen, die über ein Verteilgetriebe 16 von einem Antriebsmotor 17 antreibbar sind. Der Antriebsmotor 17 kann beispielsweise als Elektro- oder Hydraulikmotor ausgebildet sein. Die elektrische oder hydraulische Antriebsleistung kann dabei von einem (nicht sichtbaren) Verbrennungsmotor, insbesondere Dieselmotor, bereitgestellt werden.

Zur Aufnahme von Ladegut in der Arbeitsstellung der Überladestation wird diese quer zur Längsausrichtung des Bodens bewegt. Eine entsprechende Stellung der Räder 18 der Überladestation ist in der Fig. 1 dargestellt. Ein Transport der Überladestation 1 erfolgt dagegen in Längsausrichtung des Bodens, um die relativ geringe Breite, die die Überladestation nach dem Hochschwenken der Rampe 5 (vgl. Fig. 3 und 4) aufweist, auszunutzen. Um dies zu ermöglichen, sind alle Räder 18 der Überladestation um mindestens 90° um jeweils eine in etwa vertikal ausgerichtete Drehachse schwenkbar gelagert.

Eine Steuerung der Überladestation erfolgt personell, wozu diese mit einem Führerhaus 19 ausgestattet ist.

Um auch die Länge der Überladestation für den Transport möglichst klein zu halten, ist die Weiterfördervorrichtung 2 einziehbar ausgebildet. Diese kann somit für den Transport oberhalb der Bodenfördervorrichtung 4 (mit im Wesentlichen paralleler Ausrichtung zu der Bodenfördervorrichtung 4) positioniert werden, wie dies in den Fig. 3 und 4 dargestellt ist.

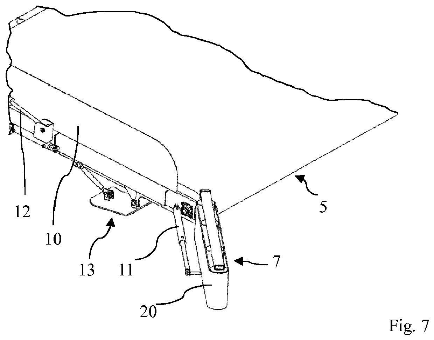

Die in den Fig. 6 und 7 dargestellte Überladestation unterscheidet sich von derjenigen, die in den Fig. 1 bis 5 gezeigt ist, ausschließlich in der Ausgestaltung der Zuführelemente 7. Dort kommen als Zuführfördervorrichtungen Förderbänder 20 zum Einsatz.

### Bezugszeichen:

- 1.: Aufnahmebehälter
- 2.: Weiterfördervorrichtung
- 3.: Förderband
- 4.: Bodenfördervorrichtung
- 5.: Rampe
- 6.: Stirnwand
- 7.: Zuführelement
- 8.: Förderschnecke
- 9.: Gehäuse
- 10.: Führungswand
- 11.: Zylinder
- 12.: Zylinder
- 13.: Stützelement
- 14.: Einstellelement
- 15.: Antriebsrad
- 16.: Verteilgetriebe
- 17.: Antriebsmotor
- 18.: Rad
- 19.: Führerhaus
- 20.: Förderband

## Patentansprüche

1. Überladestation zur Aufnahme und Übergabe von Ladegut mit
- einem Aufnahmebehälter (1) mit einem Boden und einer Rampe (5), die sich ausgehend von dem Boden quer bezüglich einer Längsausrichtung des Bodens erstreckt,
- einer entlang des Bodens in dessen Längsausrichtung erstreckenden Bodenfördervorrichtung (4) und
- einer sich an die Bodenfördervorrichtung (4) anschließenden Weiterfördervorrichtung (2),
wobei an der Rampe (5) an dem bezüglich des Bodens distalen Ende mindestens ein Zuführelement (7) angeordnet ist, das die Rampe (5) sowohl in Längsausrichtung des Bodens als auch quer dazu überragt, **dadurch gekennzeichnet, dass** das mindestens eine Zuführelement (7) um eine erste, quer zu einer Oberseite der Rampe (5) ausgerichtete Drehachse und um eine zweite, quer zu der ersten Drehachse ausgerichtete Drehachse schwenkbar bezüglich der Rampe (5) ausgebildet ist.

2. Überladestation gemäß Anspruch 1, **dadurch gekennzeichnet, dass** ein erstes Zuführelement (7) die Rampe (5) in einer ersten Richtung der Längsausrichtung des Bodens überragt und ein zweites Zuführelement (7) die Rampe (5) in einer zweiten Richtung der Längsausrichtung des Bodens überragt.

3. Überladestation gemäß einem der vorhergehenden Ansprüche, **dadurch gekennzeichnet, dass** das mindestens eine Zuführelement (7) an einem Übergang von dem distal bezüglich des Bodens angeordneten Ende der Rampe (5) in eine der quer zur Längsausrichtung des Bodens ausgerichteten Seiten mit der Rampe (5) verbunden ist.

4. Überladestation gemäß einem der vorhergehenden Ansprüche, **dadurch gekennzeichnet, dass** das mindestens eine Zuführelement (7) eine Zuführfördervorrichtung mit einer von dem freien Ende in Richtung der Rampe (5) ausgerichteten Förderrichtung umfasst.

5. Überladestation gemäß einem der vorhergehenden Ansprüche, **dadurch gekennzeichnet, dass** die Rampe (5) an einer oder beiden quer zur Längsausrichtung des Bodens ausgerichteten Seiten eine Führungswand (10) aufweist.

6. Überladestation gemäß einem der vorhergehenden Ansprüche, **dadurch gekennzeichnet, dass** die Rampe (5) an dem bezüglich des Bodens proximalen Ende um eine in Längsausrichtung des Bodens verlaufende Drehachse schwenkbar ist.

7. Überladestation gemäß einem der vorhergehenden Ansprüche, **gekennzeichnet durch** eine Stirnwand (6), die auf der der Rampe (5) gegenüberliegenden Seite des Bodens angeordnet ist.

8. Überladestation gemäß einem der vorhergehenden Ansprüche, **dadurch gekennzeichnet, dass** die Rampe (5) eine Rampenfördervorrichtung mit einer in Richtung des Bodens ausgerichteten Förderrichtung aufweist.

9. Überladestation gemäß einem der vorhergehenden Ansprüche, **dadurch gekennzeichnet, dass** die Rampe (5) ein Stützelement (13) umfasst, durch das ein Abstand des bezüglich des Bodens distalen Endes der Rampe (5) zu einem Untergrund einstellbar ist.

10. Überladestation gemäß einem der vorhergehenden Ansprüche, **dadurch gekennzeichnet, dass** die Weiterfördervorrichtung von der sich an die Bodenfördervorrichtung anschließenden Anordnung in eine entlang des Bodens ausgerichtete Anordnung bewegbar ist.

11. Überladestation gemäß einem der vorhergehenden Ansprüche, **gekennzeichnet durch** ein Fahrgestell.

12. Überladestation gemäß Anspruch 11, **dadurch gekennzeichnet, dass** die Räder (18) des Fahrgestells derart schwenkbar sind, dass ein Bewegen der Überladestation in Längsausrichtung des Bodens sowie quer dazu möglich ist.

## Claims

1. A transfer station for receiving and delivering loads, comprising
- a receiving hopper (1) having a base and a ramp (5) that, starting from the base, extends transversely with respect to a longitudinal orientation of the base,
- a base conveyor device (4) that extends along the base in the longitudinal orientation thereof, and
- a further conveyor device (2) that adjoins the base conveyor device (4),
wherein at least one feed element (7) is situated on the ramp (5) at the distal end with respect to the base, the feed element projecting beyond the ramp (5) in the longitudinal orientation of the base and also transversely thereto, **characterized in that** the at least one feed element (7) is pivotable relative to the ramp (5) about a first rotational axis that is oriented transversely with respect to a top side of the ramp (5) and about a second rotational axis that is oriented transversely with respect to the first rotational axis.

2. The transfer station according to Claim 1, **characterized in that** a first feed element (7) projects beyond the ramp (5) in a first direction of the longitudinal orientation of the base, and a second feed element (7) projects beyond the ramp (5) in a second direction of the longitudinal orientation of the base.

3. The transfer station according to one of the preceding claims, **characterized in that** the at least one feed element (7) is connected to the ramp (5) at a transition from the distal end of the ramp (5) with respect to the base into one of the sides oriented transversely with respect to the longitudinal orientation of the base.

4. The transfer station according to one of the preceding claims, **characterized in that** the at least one feed element (7) includes a feed conveyor device having a conveying direction that is oriented from the free end toward the ramp (5).

5. The transfer station according to one of the preceding claims, **characterized in that** the ramp (5) has a guide wall (10) on one or both sides that extend transversely with respect to the longitudinal orientation of the base.

6. The transfer station according to one of the preceding claims, **characterized in that** at the proximal end with respect to the base, the ramp (5) is pivotable about a pivot axis that extends in the longitudinal orientation of the base.

7. The transfer station according to one of the preceding claims, **characterized by** an end-face wall (6) that is situated on the side of the base opposite from the ramp (5).

8. The transfer station according to one of the preceding claims, **characterized in that** the ramp (5) has a ramp conveyor device having a conveying direction that is oriented in the direction of the base.

9. The transfer station according to one of the preceding claims, **characterized in that** the ramp (5) includes a support element (13) by means of which the distance of the distal end of the ramp (5), with respect to the base, from the ground is adjustable.

10. The transfer station according to one of the preceding claims, **characterized in that** the further conveyor device is movable from the arrangement adjoining the base conveyor device to an arrangement that is oriented along the base.

11. The transfer station according to one of the preceding claims, **characterized by** a chassis.

12. The transfer station according to Claim 11, **characterized in that** the wheels (18) of the chassis are pivotable in such a way that it is possible to move the transfer station in the longitudinal orientation of the base and also transversely thereto.

## Revendications

1. Poste de transfert pour la réception et le transfert de charges, avec
- un conteneur de réception (1) avec un fond et une rampe (5) qui s'étend depuis le fond et en direction transversale par rapport à la direction longitudinale du fond,
- un transporteur de fond (4) s'étendant sur le fond en sa direction longitudinale, et
- un transporteur ultérieur (2) succédant au transporteur de fond (4),
où sur la rampe (5) est agencé au moins un élément d'alimentation (7) sur l'extrémité distale par rapport au fond, où la rampe s'élève en direction longitudinale du fond, mais également transversalement à celui-ci, **caractérisé en ce que** le au moins un élément d'alimentation (7) peut pivoter par rapport à la rampe (5) autour d'un premier axe de rotation transversal à la face supérieure de la rampe (5) et autour d'un deuxième axe de rotation, transversal au premier axe de rotation.

2. Poste de transfert selon la revendication 1, **caractérisé en ce qu'**un premier élément d'alimentation (7) s'élève de la rampe (5) dans une première direction de la direction longitudinale du fond et un deuxième élément d'alimentation (7) s'élève de la rampe (5) dans une deuxième direction de la direction longitudinale du fond.

3. Poste de transfert selon l'une des revendications précédentes, **caractérisé en ce qu'**un premier élément d'alimentation (7) est relié à la rampe (5) par une transition de l'extrémité distale par rapport au fond, de la rampe (5) sur un des côtés transversaux à la direction longitudinale du fond.

4. Poste de transfert selon l'une des revendications précédentes, **caractérisé en ce que** le au moins un élément d'alimentation (7) comporte un dispositif transporteur d'alimentation avec un dispositif transporteur orienté depuis l'extrémité libre en direction de la rampe (5).

5. Poste de transfert selon l'une des revendications précédentes, **caractérisé en ce que** la rampe (5) présente une paroi de guidage (10) sur un ou les deux cotés orientés transversalement à la direction longitudinale du fond.

6. Poste de transfert selon l'une des revendications précédentes, **caractérisé en ce que** la rampe (5) peut osciller sur l'extrémité proximale par rapport au fond, autour d'un axe de rotation s'étendant en direction longitudinale du fond.

7. Poste de transfert selon l'une des revendications précédentes, **caractérisé en ce qu'**une paroi avant est agencée sur le côté du fond opposé à la rampe (5).

8. Poste de transfert selon l'une des revendications précédentes, **caractérisé en ce que** la rampe (5) présente un dispositif transporteur de rampe avec un dispositif transporteur orienté en direction du fond.

9. Poste de transfert selon l'une des revendications précédentes, **caractérisé en ce que** la rampe (5) comporte un appui (13), par lequel la distance de l'extrémité de la rampe (5), distale par rapport au fond, à un support peut être réglée.

10. Poste de transfert selon l'une des revendications précédentes, **caractérisé en ce que** le dispositif transporteur ultérieur de l'agencement suivant le dispositif transporteur de fond, est mobile.

11. Poste de transfert selon l'une des revendications précédentes, **caractérisé par** un chariot.

12. Poste de transfert selon la revendication 11, **caractérisé en ce que** les roues (18) du chariot sont orientables de sorte qu'il soit possible de déplacer le poste de transfert en direction longitudinale du sol, ainsi qu'en direction transversale à celle-ci.
